# EUROPÄISCHE PATENTSCHRIFT

(11) **EP 1 117 917 B1**
(45) Veröffentlichungstag und Bekanntmachung des Hinweises auf die Patenterteilung: **17.07.2002**
(21) Anmeldenummer: 99955708.5
(22) Anmeldetag: 14.09.1999
(51) Int. Cl.: F02D 41/02, F02D 41/14, F01N 3/10

(54) **VERFAHREN ZUM REGENERIEREN EINES NOx-SPEICHERKATALYSATORS**
METHOD FOR REGENERATING AN NOx STORAGE CATALYTIC CONVERTER
PROCEDE PERMETTANT DE REGENERER UN CATALYSEUR A ACCUMULATION DE NOx

(30) Priorität: 25.09.1998 DE 19844082
(43) Veröffentlichungstag der Anmeldung: 25.07.2001
(73) Patentinhaber: SIEMENS AKTIENGESELLSCHAFT, 80333 München (DE)
(72) Erfinder: SCHÜRZ, Willibald, D-93089 Aufhausen (DE); ELLMER, Dietmar, D-93199 Schillertswiesen (DE)
(86) Internationale Anmeldenummer: DE9902928
(87) Internationale Veröffentlichungsnummer: WO0019075

(56) Entgegenhaltungen:
- EP-A- 0 585 900
- EP-A- 0 636 770
- EP-A- 0 733 787
- EP-A- 0 814 248
- EP-A- 0 898 067
- WO-A-98/55742

## Beschreibung

Die Erfindung betrifft ein Verfahren zum Regenerieren eines NOx-Speicherkatalysators gemäß dem Oberbegriff des Patentanspruches 1, gemäß EP-A-733 787.

Um den Kraftstoffverbrauch von Kraftfahrzeugen mit ottomotorischem Antrieb weiter zu reduzieren, kommen immer häufiger Brennkraftmaschinen zum Einsatz, die mit magerem Gemisch betrieben werden. Zur Erfüllung der geforderten Abgasemissionsgrenzwerte ist bei solchen Brennkraftmaschinen eine spezielle Abgasnachbehandlung notwendig. Dazu werden NOx-Speicherkatalysatoren verwendet. Diese NOx-Speicherkatalysatoren sind aufgrund ihrer Beschichtung während einer Speicherphase in der Lage, NOx-Verbindungen aus dem Abgas zu adsorbieren, die bei magerer Verbrennung entstehen. Während einer Regenerationsphase werden die adsorbierten bzw. gespeicherten NOx-Verbindungen unter Zugabe eines Reduktionsmittels in unschädliche Verbindungen umgewandelt. Als Reduktionsmittel für magerbetriebene Otto-Brennkraftmaschinen können CO, H2 und HC (Kohlenwasserstoffe) verwendet werden. Diese werden durch kurzzeitigen Betrieb der Brennkraftmaschine mit einem fetten Gemisch erzeugt und dem NOx-Speicherkatalysator als Abgaskomponenten zur Verfügung gestellt, wodurch die gespeicherten NOx-Verbindungen im Katalysator abgebaut werden.

Der Speicherwirkungsgrad eines solchen NOx-Speicherkatalysators hängt von zahlreichen, in der Literatur beschriebenen Einflußgrößen ab. Eine primäre Einflußgröße stellt der Katalysatorbeladungsgrad dar, d.h. mit zunehmender Dauer der Magerphase und daraus resultierenden Speicherung von NOx nimmt der Speicherwirkungsgrad kontinuierlich ab, so daß unter Berücksichtigung der Abgasgrenzwerte oder weiterer Betriebsbedingungen eine Umschaltung in den Fett- d.h. in den Regenerationsbetrieb notwendig wird. An den Regenerationsbetrieb werden aus verbrauchs- bzw. emissionsrelevanten Gründen folgende Forderungen gestellt:
- Für eine verbrauchseffiziente und emissionsgünstige Regeneration des NOx-Speicherkatalysators sollten die Regenerationsmittel möglichst zügig eingebracht werden, d.h. es sollte ein möglichst fettes, unter der Bedingung der Fahrbarkeit akzeptables Gemisch (z.B. Lambda =0,7-0,8) gewählt werden.
- Es sollte bei der, durch den Regenerationsbetrieb auftretenden NOx-Desorptionsspitze aus emissionsrelevanten Gründen eine möglichst kleine Menge NOx an die Umwelt abgegeben werden.
- Die Menge an aus dem Nox-Speicherkatalysator austretenden Regenerationsmittel bei einem Regenerationsmitteldurchbruch sollte möglichst gering ausfallen.

Die Umsetzung dieser primären Anforderungen an eine optimale Regenerationsphase werden durch jede Ungenauigkeit in der berechneten Beladungsmenge zu den Zeitpunkten der Umschaltung und bei jeder Ungenauigkeit der Regenerationsmittelbedarfsermittlung erheblich erschwert.

Bekannte Lösungen dieses Problems basieren auf einer in ihrer Art variierenden Modellrechnung zur Ermittlung der aktuellen Beladung und des Regenerationsmittelbedarfs bzw. der Regenerationsdauer, wobei die Güte des Modells (Struktur und Kalibration) die Güte der Lösung des oben beschriebenen Problems vorgibt (z.B. DE 195 17 168 A1).

Aus der EP 0 597 106 A1 ist ein Verfahren zur Regeneration eines NOx-Speicherkatalysators bekannt, bei dem die vom NOx-Speicherkatalysator adsorbierte Menge an NOx-Verbindungen in Abhängigkeit von Betriebsdaten der Brennkraftmaschine berechnet wird. Bei Überschreiten einer vorbestimmten Grenzmenge von im NOx-Speicherkatalysator gespeichertem NOx wird eine Regenerationsphase eingeleitet. Auf diese Weise ist jedoch ein zuverlässiges Einhalten der Abgasemissionsgrenzwerte nicht gewährleistet.

Der Erfindung liegt die Aufgabe zugrunde, ein Verfahren anzugeben, mit dem der Regenerationsmittelbedarf nahezu verbrauchs- und emissionsoptimal ermittelt und somit der Umschaltzeitpunkt von Fettbetrieb zu Magerbetrieb möglichst exakt bestimmt werden kann.

Diese Aufgabe wird durch die Merkmale des Patentanspruchs 1 gelöst. Vorteilhafte Ausgestaltungen der Erfindung sind in den Unteransprüchen angegeben.

Die Vorteile des erfindungsgemäßen Verfahrens liegen darin, daß die Regenerationsmittelmenge in Abhängigkeit vom Sauerstoffgehalt im Abgas variiert wird. Des weiteren dient der Sauerstoffgehalt im Abgas zur Triggerung der Umschaltung von Mager- auf Fettbetrieb und erhöht damit die Genauigkeit der Dosierung der Regenerationsmittel. Die Nutzung eines entsprechenden Sondensignals über den Sauerstoffgehalt im Abgas stromabwärts des NOx-Speicherkatalysators kompensiert alle auftretenden Ungenauigkeiten einer Streuung der realen NOx-Beladung des NOx-Speicherkatalysators, da nur solange Regenerationsmittel über den Fettbetrieb zur Verfügung gestellt wird, solange diese aktiv am Abbau der im Katalysator gespeicherten NOx beteiligt sind.

Unter Einbeziehung eines solchen Sondensignals nach dem NOx-Speicherkatalysator kann die Regenerationsmittelmenge zu Beginn der Regeneration verbrauchs- und emissionsoptimal gewählt werden (LAM_SOLL = 0,7 bis 0,8). Sinkt der Sauerstoffgehalt im Abgas gegenüber dem zu Beginn der Regeneration erzielten Maximalwerts mit der Dauer der Regeneration marginal jedoch kontinuierlich ab, wird der Regenerationsmittelmenge schrittweise bis nahe dem Wert Null, entsprechend einem Lambdawert = 1 angepaßt. Diese Variation der Regenerationsmittelmenge ermöglicht eine Minimierung des Regenerationsmitteldurchbruchs durch eine an den Sauerstoffgehalt des Abgases geknüpfte Feindosierung der Regenerationsmittel.

Die Erfindung wird nachfolgend unter Bezugnahme auf die Zeichnung näher erläutert. Es zeigen:
- Figur 1: eine schematische Darstellung einer Brennkraftmaschine mit einem NOx-Speicherkatalysator,
- Figur 2: ein Diagramm zeitlicher Verläufe verschiedener Signale für eine Regeneration ohne Variation der Luftzahl Lambda während des Fett-Betriebes der Brennkraftmaschine und
- Figur 3: ein Diagramm zeitlicher Verläufe verschiedener Signale für eine Regeneration mit Variation der Luftzahl Lambda während des Fett-Betriebes der Brennkraftmaschine.

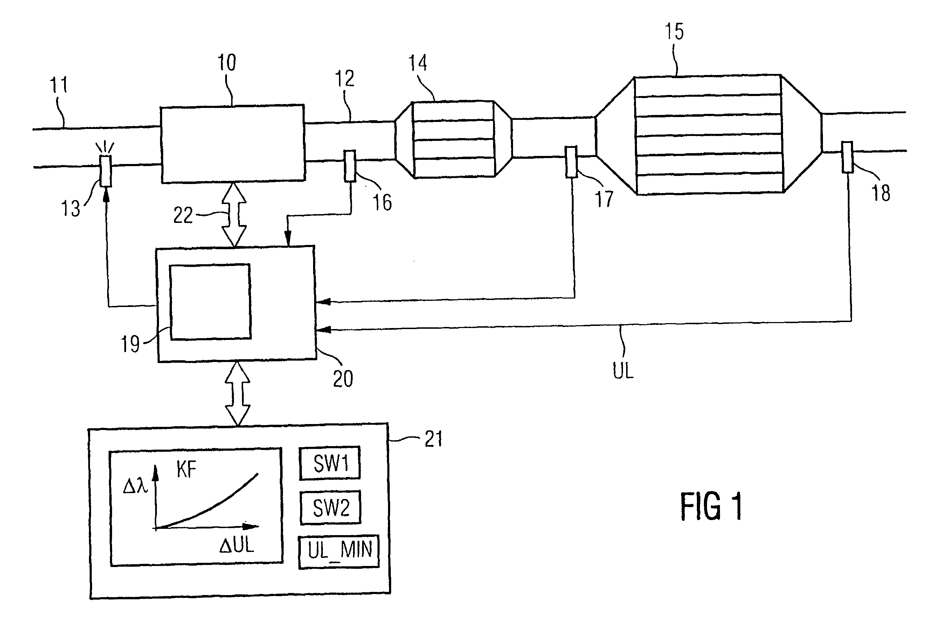

In Fig. 1 ist in Form eines Blockschaltbildes eine Brennkraftmaschine mit einer Abgasnachbehandlungsanlage gezeigt, bei der das erfindungsgemäße Verfahren angewendet wird. Dabei sind nur die Teile und Komponenten dargestellt, die zum Verständnis der Erfindung nötig sind.

Eine Brennkraftmaschine 10 weist einen Ansaugtrakt 11 und einen Abgastrakt 12 auf. Im Ansaugtrakt 11 ist eine Kraftstoffzumeßeinrichtung vorhanden, von der nur ein Einspritzventil 13 schematisch dargestellt ist. Alternativ zur Einspritzung in das Saugrohr kann der Kraftstoff auch direkt in die Zylinder der Brennkraftmaschine eingespritzt werden (Direkteinspritzung). Im Abgastrakt 12 ist eine Abgasnachbehandlungsanlage für mageres Abgas vorgesehen. Sie besteht aus einem motornahen 3-Wege Katalysator 14, auch als Vorkatalysator bezeichnet und einem in Strömungsrichtung des Abgases nachgeschalteten NOx-Speicherkatalysator 15. Bei der Auswahl und Dimensionierung des Vorkatalysators 14 ist neben dem Light-off-Verhalten auch das Sauerstoffspeichervermögen zu berücksichtigen. Vorteilhaft ist eine minimierte O₂-Speicherkapazität, damit die während des Fettbetriebes bereitgestellte Regenerationsmittelmenge möglichst unvermindert dem NOx-Speicherkatalysator 15 zur Verfügung steht. Die bereits weitgehende Oxidation von HC und CO im Vorkatalysator 14 während des Magerbetriebes der Brennkraftmaschine wirkt sich günstig auf den NOx-Speicherwirkungsgrad aus.

In der Beschichtung des NOx-Speicherkatalysators 15 ist durch die Edelmetallbestandteile die 3-Wege-Funktion für den stöchiometrischen Betriebsbereich mit integriert.

Die Minimalkonfiguration der Sensorik für die Abgasnachbehandlungsanlage beinhaltet einen Sauerstoffmeßaufnehmer 16 stromaufwärts des Vorkatalysators 14, einen Temperatursensor 17 im Verbindungsrohr zwischen Vorkatalysator 14 und NOx-Speicherkatalysator 15 nahe am Eintrittsbereich desselben und einen weiteren Sauerstoffmeßaufnehmer 18 stromabwärts des NOx-Speicherkatalysators 15.

Als Sauerstoffmeßaufnehmer 16 wird vorzugsweise eine Breitband-Lambdasonde eingesetzt, welche in Abhängigkeit des Sauerstoffgehaltes im Abgas ein stetiges, z.B. lineares Ausgangssignal abgibt. Mit dem Signal dieser Breitband-Lambdasonde 16 wird die Luftzahl während des Magerbetriebes und während der Regenerationsphase mit fettem Gemisch entsprechend der Sollwertvorgaben eingeregelt. Diese Funktion übernimmt eine an sich bekannte Lambdaregelungseinrichtung 19, die vorzugsweise in eine den Betrieb der Brennkraftmaschine 10 steuernde Steuerungseinrichtung 20 integriert ist. Solche elektronischen Steuerungseinrichtungen, die in der Regel einen Mikroprozessor beinhalten und die neben der Kraftstoffeinspritzung und der Zündung noch eine Vielzahl weiterer Steuer- und Regelaufgaben, u.a. auch die Steuerung der Abgasnachbehandlungsanlage übernehmen, sind an sich bekannt, so daß im folgenden nur auf den im Zusammenhang mit der Erfindung relevanten Aufbau und dessen Funktionsweise eingegangen wird.
Insbesondere ist die Steuerungseinrichtung 20 mit einer Speichereinrichtung 21 verbunden, in dem u.a. ein Kennlinie und verschiedene Schwellenwerte gespeichert sind, deren jeweilige Bedeutung anhand der Beschreibung der nachfolgenden Figuren noch näher erläutert wird.

Zur Regelung des Kraftstoff-/Luftgemisches der Brennkraftmaschine im optimalen Lambda-Fenster während des stöchiometrischen Betriebs ist das Signal des nach dem NOx-Speicherkatalysator 15 angeordneten Sauerstoffmeßaufnehmers 18 als Führungssonde erforderlich. Als Sauerstoffmeßaufnehmer 18 dient vorzugsweise eine binäre Lambdasonde (2-Punkt-Lambdasonde) auf der Basis von Zirkonoxid Zr02, die bei einem Lambdawert λ=1 bezüglich ihres Ausgangssignales eine Sprungcharakteristik aufweist. Dieses Sondensignal der nach dem NOx-Speicherkatalysator angeordneten Lambdasonde wird auch zur Steuerung der Speicherregeneration und zur Adaption von Modellgrößen wie z.B. der Sauerstoff- bzw. NOx-Speicherkapazität eingesetzt.

Anstelle der binären Lambdasonde als Sauerstoffmeßaufnehmer 18 können zur Durchführung des erfindungsgemäßen Verfahrens auch andere Sensoren verwendet werden, die ein der Sauerstoffkonzentration stromabwärts des NOx-Speicherkatalysators 15 entsprechendes Signal abgeben. So kann neben einer Breitband-Lambdasonde (stetige Lambdasonde) insbesondere auch ein NOx-Sensor eingesetzt werden, aus dessen Ausgangssignal sich eine die Sauerstoffkonzentration im Abgas repräsentierende Größe ableiten läßt. Ein solcher Meßaufnehmer ist beispielsweise aus N. Kato et al., "Performance of Thick Film NOx Sensor on Diesel and Gasoline Engines", Society of Automotive Engineers, Publ. No.970858 bekannt. Das Signal eines solchen amperometrischen NOx-Meßaufnehmers gibt den Lambda-Wert bzw. die Sauerstoffkonzentration im Abgas wieder und weist Zweipunktverhalten auf, d.h. im Bereich vom Lambda = 1 ändert sich das Signal bei geringen Lambdaänderungen stark.

Die Temperatur des NOx-Speicherkatalysators, die zur verbrauchs- und emissionsoptimalen Steuerung des Systems erforderlich ist, wird mittels eines Temperaturmodells aus dem Sensorsignal des Temperatursensors 17 errechnet. Basierend auf diesem Meßsignal werden auch Katalysatorheiz- bzw. Katalysatorschutzmaßnahmen eingeleitet. Alternativ hierzu kann die Temperatur des NOx-Speicherkatalysators 15 auch direkt gemessen werden, indem ein Temperatursensor unmittelbar im Gehäuse desselben angeordnet wird.

Die Steuerungseinrichtung 19 ist ferner über eine nur schematisch dargestellte Daten- und Steuerleitung 22 mit weiteren, der Brennkraftmaschine zugeordneten Meßaufnehmern und Aktoren verbunden.

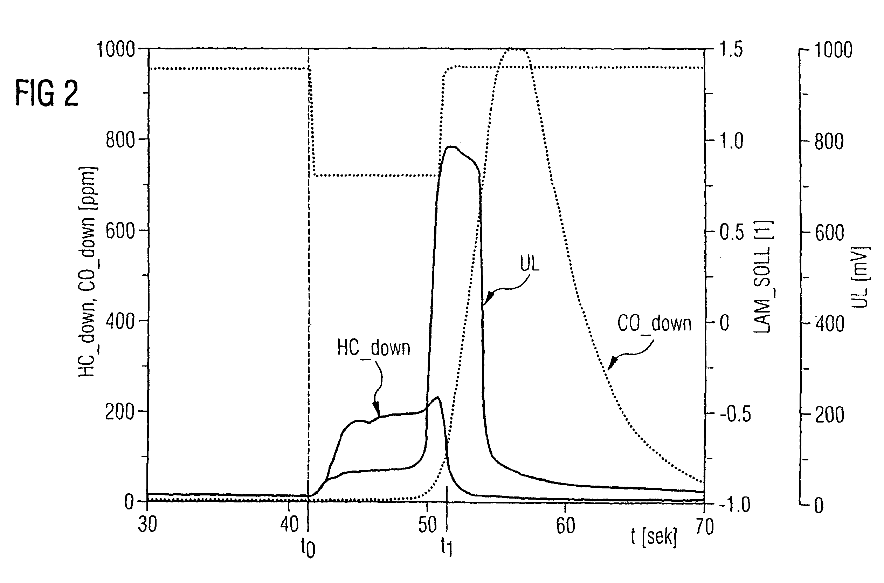

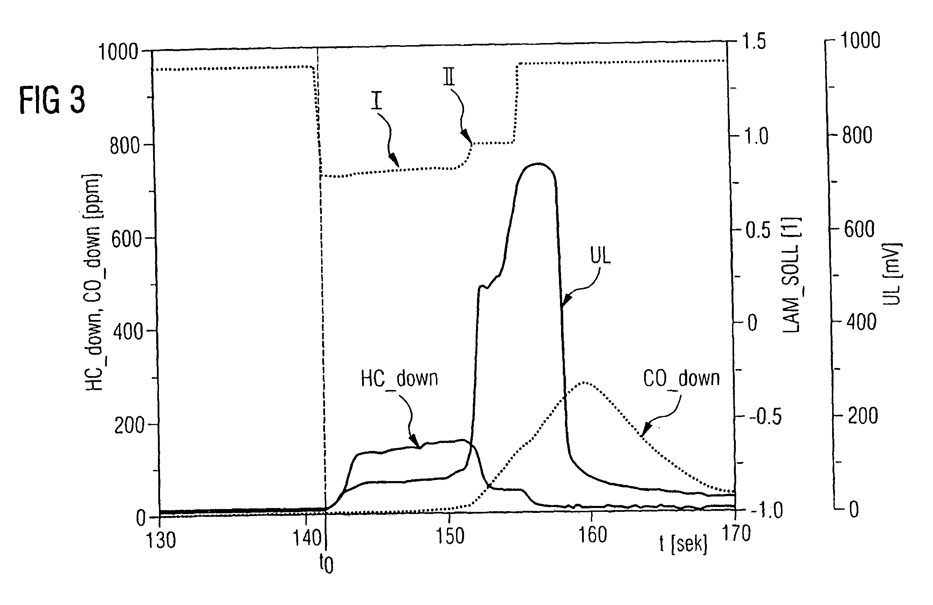

Die nachfolgenden Figuren veranschaulichen den Regenerationsmitteldurchbruch bei einer Regeneration des NOx-Speicherkatalysators 15 ohne Anpassung der Regenerationsmittel (Figur 2) und mit Anpassung der Regenerationsmittel (Figur 3).

Figur 2 zeigt den zeitlichen Verlauf des Ausgangssignals UL des Sauerstoffmeßaufnehmers 18, in diesem Fall das Signal einer binären Lambdasonde vor, während und nach einer Regenerationsphase des NOx-Speicherkatalysators 15. Die elektrische Beschaltung dieser binären Lambdasonde ist dabei so, daß sie bei Sauerstoffüberschuß im Abgas (Magerbetrieb) eine niedrige Ausgangsspannung und bei Sauerstoffmangel (Fettbetrieb) eine höhere Ausgangsspannung abgibt.

Weiter ist in dieses Diagramm der Verlauf des Lambdasollwertes LAM_SOLL eingezeichnet, mit dem die Brennkraftmaschine betrieben werden soll. Vor Einleitung einer Regenerationsphase des NOx-Speicherkatalysators 18 wird die Brennkraftmaschine mit einem mageren Gemisch (LAM_SOLL=1,4) betrieben. Zu Beginn der Regenerationsphase zum Zeitpunkt t0 springt der Lambdasollwert LAM_SOLL von diesem Wert LAM_SOLL=1,4 auf einen Wert, der fettes Gemisch anzeigt (LAM_SOLL=0,8). Während der gesamten Regenerationsphase wird die Luftzahl Lambda LAM_SOLL konstant gehalten. Nach Abschluß der Regenerationsphase zum Zeitpunkt t1 wird die Brennkraftmaschine wieder mit magerem Gemisch betrieben.

Ferner sind im Diagramm nach Figur 2 noch die zeitliche Konzentration der Regenerationsmittel Kohlenwasserstoff HC_down und Kohlenmonoxid CO_down stromabwärts des NOx-Speicherkatalysators 15 eingetragen. Die Fläche, die von dem Kurvenverlauf des CO_down -Signals und der Zeitachse t eingeschlossen wird, kann als Maß für die Menge an durchgebrochenen Regenerationsmittel (Regenerationsmittelschlupf) betrachtet werden.

Das Diagramm nach Figur 3 zeigt die Verläufe derselben Signale wie in Figur 2, für den Fall, daß die Regenerationsmittelkonzentration während der Regenerationsphase des NOx-Speicherkatalysators 15 in Abhängigkeit des Ausgangssignals des Sauerstoffmeßaufnehmers 18 stromabwärts des NOx-Speicherkatalysators variiert wird.

Zur Ermittlung des Sauerstoffgehaltes nach dem NOx-Speicherkatalysator 15 wird wieder das Signal einer binären Lambdasonde (Zr02-Sonde) verwendet. Da die Brennkraftmaschine vor Einleitung der Regenerationsphase mit einem mageren Gemisch (LAM_SOLL=1,4) betrieben wurde, erreicht zu Beginn der Regeneration dieses Sondensignal bei einem Regenerationslambda LAM_SOLL= 0,8 einen Wert von typisch 0,08 Volt (Indikator für Sauerstoffüberschuß im Abgas stromab des NOx-Speicherkatalysators). Der angegebene Wert ist von verschiedenen Einflüßen abhängig, insbesondere von der Abgastemperatur und gilt somit für einen bestimmten Sondentyp bei einer bestimmten Abgastemperatur. Dieser Wert wird zum Zeitpunkt des Beginns der Regenerationsphase erfaßt und in der Speichereinrichtung 21 der elektronischen Steuerungseinrichtung 20 als Minimalwert UL_MIN gespeichert.

Bei Fortschreiten der Regeneration steigt das Sondensignal UL langsam gegenüber dem Minimalwert an. Durch den Vergleich mit dem gespeicherten Minimalwert UL_MIN kann nun mit Hilfe einer Anpassung des Wertes LAM_SOLL eine Verringerung der Regenerationsmittelmenge durchgeführt werden. Hierzu wird das Signal der binären Lambdasonde in festen Zeitabständen (Abtastraster) erfaßt und die Differenz ΔUL zwischen dem gespeicherten Minimalwert UL_MIN und dem aktuell vorliegenden Wert UL gebildet. Anschließend wird zu dieser Differenz ΔUL aus einer Kennlinie KF, die in der Speichereinrichtung 21 abgelegt ist, ein zugehöriger Wert Δλ für eine Verschiebung des Lambdawertes LAM_SOLL in Richtung zu einem mageren Gemisch ausgelesen. Durch eine solche Verschiebung des Lambdawertes in Richtung mageres Gemisch (Bereich I in Figur 3) wird die Konzentration der Regenerationsmittel abgesenkt. Steigt das Signal UL relativ stark an, ist also die Differenz AUL relativ groß, so erfolgt auch die Anpassung des Lambdawertes LAM_SOLL stärker an den stöchiometrischen Wert (Bereich II in Figur 3) und bleibt dann in der Nähe dieses Wertes (λ≈0,98-0,99) solange bis der Reduktionsmitteldurchbruch erreicht ist, d.h. bis ein vorgegebener Schwellenwert SW2 für die Differenz ΔUL, bei dem die Regeneration abgebrochen werden soll, überschritten wird.

Überschreitet die Differenz ΔUL den vorgegebenen Schwellenwert SW2, d.h. der Sauerstoffgehalt im Abgas nach dem NOx-Speicherkatalysator ist nahezu Null und es folgt unmittelbar ein Regenerationsmitteldurchbruch, erfolgt unmittelbar die Umschaltung zum Magerbetrieb.

In einer einfacheren Ausgestaltung der Erfindung erfolgt keine kontinuierliche Anpassung des Lambdasollwertes LAM_SOLL mittels der Kennlinie KF, sondern bei Erreichen eines ersten Schwellenwertes SW1 der Differenz ΔUL wird der Lambdasollwert LAM_SOLL unmittelbar in die Nähe λ=1, beispielsweise auf 0,97 gestellt und bei Erreichen eines zweiten Schwellenwertes SW2, der deutlich höher liegt als der erste, wird auf Magerbetrieb umgeschaltet.

Die funktionelle Zuordnung zwischen Differenz ΔUL der Ausgangsspannung UL und der Lambdaverschiebung Δλ, sowie die Höhe der Schwellenwerte SW1, SW2 werden experimentell ermittelt.

Der Vergleich der Diagramme nach den Figuren 2 und 3 zeigt, daß eine Anpassung der Regenerationsmittel über eine Verstellung des Lambda-Sollwertes LAM_SOLL in Abhängigkeit des Signals des Sauerstoffmeßaufnehmers nach dem NOx-Speicherkatalysators zu einer deutlich kleineren Fläche unter dem CO_down-Signal führt. Dies bedeutet, daß der Regenerationmitteldurchbruch bedeutend geringer ausfällt.

## Patentansprüche

1. Verfahren zum Regenerieren eines NOx-Speicherkatalysators (15),
- der im Abgastrakt (12) einer zumindest teilweise mit Luftüberschuß betriebenen Brennkraftmaschine (10) angeordnet ist und der
- NOx während einer Speicherphase adsorbiert, wenn die Brennkraftmaschine (10) mit einem mageren Luft-Kraftstoff-Verhältnis betrieben wird,
- der in einer Regenerationsphase unter Zugabe von Regenerationsmittel das gespeicherte NOx katalytisch umsetzt, wobei
- die Regenerationsmittel durch gegenüber der Speicherphase kurzzeitigen Betrieb der Brennkraftmaschine (10) mit stöchiometrischem oder fettem Luft-Kraftstoff-Verhältnis (LAM_SOLL) bereitgestellt werden,
- mit einem die Sauerstoffkonzentration im Abgas stromabwärts des NOx-Speicherkatalysators (15) erfassenden Meßaufnehmer (18),
**dadurch gekennzeichnet, daß**
- die Konzentration der Regenerationsmittel während der Regenerationsphase in Abhängigkeit von der erfassten Sauerstoffkonzentration durch Ändern des Luft-Kraftstoff-Verhältnisses (LAM_SOLL) in Richtung mageres Gemisch verändert wird, indem
- das die Information über die Sauerstoffkonzentration beinhaltende Ausgangssignal (UL) des Meßaufnehmers (18) zu Beginn der Regenerationsphase erfasst wird und dieser Wert als Minimalwert (UL_MIN) abgespeichert wird,
- während der Regenerationsphase das Ausgangssignal (UL) des Meßaufnehmers (18) in bestimmten Abständen erfasst und jeweils die Differenz (ΔUL) zwischen aktuellem Wert (UL) und Minimalwert (UL_MIN) gebildet wird und
- in Abhängigkeit des Wertes der Differenz (ΔUL) die Luftzahl (LAM_SOLL) verändert wird bis das Ausgangssignal (UL) einen Schwellenwert (SW2) erreicht und anschließend auf stöchiometrischen oder mageren Betrieb der Brennkraftmaschine (10) umgeschaltet wird.

2. Verfahren nach Anspruch 1, **dadurch gekennzeichnet, daß** die Konzentration der Regenerationsmittel schrittweise in Richtung mageres Gemisch verändert wird.

3. Verfahren nach Anspruch 1, **dadurch gekennzeichnet, daß** abhängig von der Differenz (ΔUL) aus einem Kennfeld (KF) einer Speichereinrichtung (21) einer der Brennkraftmaschine (10) zugeordneten Steuerungseinrichtung (20) Werte für die Verschiebung (Δλ) des Luft-Kraftstoffverhältnisses (LAM_SOLL) in Richtung mageres Gemisch ausgelesen werden.

4. Verfahren nach Anspruch 1, **dadurch gekennzeichnet, daß**
- das die Information über die Sauerstoffkonzentration beinhaltende Ausgangssignal (UL) des Meßaufnehmers während der Regenerationsphase in bestimmten Abständen erfasst wird,
- mit einem ersten Schwellenwert (SW1) verglichen wird und bei Überschreiten dieses Schwellenwertes (SW1) das Luft-Kraftstoffverhältnis (LAM_SOLL) in Richtung mageres Gemisch in die Nähe des Wertes für stöchiometrisches Gemisch verschoben wird,
- das Ausgangssignal (UL) weiterhin erfasst wird und bei Überschreiten eines zweiten Schwellenwertes (SW2) auf stöchiometrischen oder mageren Betrieb der Brennkraftmaschine (10) umgeschaltet wird.

5. Verfahren nach Anspruch 1, **dadurch gekennzeichnet, daß** als Meßaufnehmer (18) eine binäre Lambdasonde verwendet wird, die bei einem Lambdawert gleich 1 bezüglich ihres Ausgangssignals eine Sprungcharakteristik aufweist.

6. Verfahren nach Anspruch 1, **dadurch gekennzeichnet, daß** als Meßaufnehmer (18) eine Breitbandlambdasonde verwendet wird, welche in Abhängigkeit vom Sauerstoffgehalt im Abgas ein stetiges Ausgangssignal abgibt.

7. Verfahren nach Anspruch 1, **dadurch gekennzeichnet, daß** als Meßaufnehmer (18) ein NOx-Sensor verwendet wird, aus dessen Ausgangssignal ein die Sauerstoffkonzentration repräsentierende Größe abgeleitet wird.

## Claims

1. Method for regenerating an NOx storage catalytic converter (15),
- which is arranged in the exhaust section (12) of an internal-combustion engine (10) which at least at certain times is operated with an excess of air, and which
- adsorbs NOx during a storage phase, when the internal-combustion engine (10) is operating with a lean air/fuel ratio,
- which, in a regeneration phase, during which regenerating agent is added, catalytically converts the stored NOx,
- the regenerating agents being provided as a result of the internal-combustion engine (10) being operated with a stoichiometric or rich air/fuel ratio (LAM_SOLL) for a period which is short compared to the storage phase,
- having a measuring sensor (18) which records the oxygen concentration in the exhaust gas downstream of the NOx storage catalytic converter (15),
**characterized in that**
- the concentration of the regenerating agents is changed during the regeneration phase as a function of the recorded oxygen concentration, by changing the air/fuel ratio (LAM_SOLL) towards a lean mix, by
- the output signal (UL) from the measuring sensor (18), which contains the information about the oxygen concentration, being recorded at the start of the regeneration phase and this value being stored as the minimum value (UL_MIN),
- the output signal (UL) from the measuring sensor (18) being recorded at defined intervals during the regeneration phase, and the difference (ΔUL) between the current value (UL) and the minimum value (UL_MIN) being formed in each instance, and
- the air ratio (LAM_SOLL) being changed as a function of the value of the difference (ΔUL) until the output signal (UL) reaches a threshold value (SW2), and then switching over to stoichiometric or lean operation of the internal-combustion engine (10).

2. Method according to Claim 1, **characterized in that** the concentration of the regenerating agents is changed in steps towards a lean mix.

3. Method according to Claim 1, **characterized in that** values for the shift (Δλ) in the air/fuel ratio (LAM_SOLL) towards a lean mix are read out, as a function of the difference (ΔUL), for a characteristic diagram (KF) of a memory device (21) of a control device (20) assigned to the internal-combustion engine (10).

4. Method according to Claim 1, **characterized in that**
- the output signal (UL) from the measuring sensor, which contains the information about the oxygen concentration, is recorded at defined intervals during the regeneration phase,
- is compared with a first threshold value (SW1) and, if this threshold value (SW1) is exceeded, the air/fuel ratio (LAM_SOLL) is shifted towards a lean mix, into the vicinity of the value for a stoichiometric mix,
- the output signal (UL) continues to be recorded and, in the event of a second threshold value (SW2) being exceeded, the internal-combustion engine (10) is switched over to stoichiometric or lean operation.

5. Method according to Claim 1, **characterized in that** the measuring sensor (18) used is a binary lambda sensor which, for a lambda value of 1, has a step characteristic with regard to its output signal.

6. Method according to Claim 1, **characterized in that** the measuring sensor (18) used is a broadband lambda sensor which emits a continuous output signal as a function of the oxygen content in the exhaust gas.

7. Method according to Claim 1, **characterized in that** the measuring sensor (18) used is an NOx sensor, from the output signal of which a variable which represents the oxygen concentration is derived.

## Revendications

1. Procédé de régénération d'un catalyseur à accumulation de NOx (15),
- qui est disposé dans le conduit d'échappement (12) d'un moteur à combustion interne (10) fonctionnant au moins en partie avec un excès d'air, et qui
- adsorbe les NOx pendant une phase d'accumulation lorsque le moteur à combustion interne (10) fonctionne à un rapport air-carburant plus pauvre,
- qui, pendant une phase de régénération avec addition d'agents de régénération, convertit catalytiquement les NOx accumulés,
- les agents de régénération étant apportés par un fonctionnement, de plus courte durée que la phase d'accumulation, du moteur à combustion interne (10) dans un rapport air-carburant stoechiométrique ou riche (LAM_SOLL),
- avec un capteur de mesure (18) qui détecte la concentration en oxygène dans les gaz d'échappement en aval du catalyseur à accumulation de NOx (15),
**caractérisé en ce que**
- la concentration des agents de régénération pendant la phase de régénération est modifiée en fonction de la concentration en oxygène détectée, par modification du rapport air-carburant (LAM_SOLL) en direction d'un mélange plus pauvre,
- en détectant le signal de sortie (UL) du capteur de mesure (18), qui contient les informations concernant la concentration en oxygène, au début de la phase de régénération et en conservant cette valeur en mémoire comme valeur minimale (UL_MIN),
- en détectant le signal de sortie (UL) du capteur de mesure (18) à des intervalles définis pendant la phase de régénération et en formant chaque fois la différence (ΔUL) entre la valeur effective (UL) et la valeur minimale (UL_MIN), et en modifiant l'indice d'excès d'air (LAM_SOLL) en fonction de la valeur de la différence (ΔUL) jusqu'à ce que le signal de sortie (UL) atteigne une valeur de seuil (SW2), et ensuite on fait passer le moteur à combustion interne (10) à un fonctionnement stoechiométrique ou en combustion pauvre.

2. Procédé selon la revendication 1, **caractérisé en ce que** la concentration des agents de régénération est modifiée par pas en direction d'un mélange plus pauvre.

3. Procédé selon la revendication 1, **caractérisé en ce qu'**en fonction de la différence (ΔUL), des valeurs pour le déplacement (Δλ) du rapport air-carburant (LAM_SOLL) sont lues dans un champ de lignes caractéristiques (KF) d'un dispositif de mémoire (21) d'un dispositif de commande (20) associée au moteur à combustion interne (10).

4. Procédé selon la revendication 1, **caractérisé en ce que**
- le signal de sortie (UL), contenant les informations concernant la concentration en oxygène, du capteur de mesure est détecté à intervalles définis pendant la phase de régénération du capteur de mesure (18),
- est comparé à une première valeur de seuil (SW1), et en cas de déplacement de cette valeur de seuil (SW1), le rapport air-carburant (LAM_SOLL) est déplacé en direction d'un mélange pauvre à proximité de la valeur d'un mélange stoechiométrique,
- le signal de sortie (UL) est encore détecté et en cas de déplacement d'une deuxième valeur de seuil (SW2), on passe à un fonctionnement stoechiométrique ou en conditions pauvres du moteur à combustion interne (10).

5. Procédé selon la revendication 1, **caractérisé en ce que** l'on utilise comme capteur de mesure (18) une sonde lambda binaire dont le signal de sortie présente un saut caractéristique à une valeur de lambda égale à 1.

6. Procédé selon la revendication 1, **caractérisé en ce que** l'on utilise comme capteur de mesure (18) une sonde lambda à large bande qui délivre un signal de sortie permanent en fonction de la teneur en oxygène dans les gaz d'échappement.

7. Procédé selon la revendication 1, **caractérisé en ce que** l'on utilise comme capteur de mesure (18) un capteur de NOx à partir du signal de sortie duquel on dérive une grandeur représentative de la concentration en oxygène.
